# EUROPEAN PATENT SPECIFICATION

(11) **EP 2 431 315 B1**
(45) Date of publication and mention of the grant of the patent: **18.10.2017**
(21) Application number: 11181368.9
(22) Date of filing: 15.09.2011
(51) Int. Cl.: B65H 43/02, B65H 43/08, B41J 11/00, B65H 7/02, B65H 9/06, G07F 19/00, G06Q 20/04, B65H 9/00

(54) **Media processing device, and control method for a media processing device**
Informationsträgerverarbeitungsvorrichtung, und Steuerungsverfahren für eine Informationsträgerverarbeitungsvorrichtung
Dispositif de traitement de supports d'information, et procédé de contrôle d'un dispositif de traitement de supports d'information

(30) Priority: 17.09.2010 JP 2010209661
(43) Date of publication of application: 21.03.2012
(73) Proprietor: Seiko Epson Corporation, Tokyo 163-0811 (JP)
(72) Inventor: Abe, Hiroki, Suwa-shi, Nagano 392-8502 (JP); Takei, Masahiro, Suwa-shi, Nagano 392-8502 (JP); Nishimura, Hideki, Suwa-shi, Nagano 392-8502 (JP)
(74) Representative: MERH-IP Matias Erny Reichl Hoffmann Patentanwälte PartG mbB

(56) References cited:
- JP-A- 2002 068 529
- US-A1- 2007 242 963

## Description

### BACKGROUND

### 1. Technical Field

The present invention relates to a media processing device that records on a recording medium, and a control method for a media processing device.

### 2. Related Art

Media processing devices that have a media insertion detector that detects insertion of a recording medium from the entrance to a media conveyance path, a media discharge detector that detects discharge of the recording medium from the exit of the media conveyance path, and a recording means that records on the recording medium, are known from the literature, see e.g. US 2007/0242963 A1. Media processing devices of this type commonly use a photosensor for the media detectors for reasons including assembly precision. Photosensors can detect if a recording medium is present or not by emitting light from a light-emitting device, and then detecting the reflection when the recording medium is present and the reflection when the recording medium is not present by means of a photodetector. See, for example, Japanese Unexamined Patent Appl. Pub. JP-A-2002-68529.

Depending upon where the media processing device is used, however, ambient light from the sun, for example, may enter from the paper entrance or paper exit and be picked up by the photodetector in this type of media processing device, and the media processing device may wrongly detect that recording medium is present when the recording medium is not present.

Detection errors caused by ambient light can be suppressed in this situation by repeating the detection operation of the media detectors plural times at a predetermined interval, and recognizing the detection result (whether the recording medium is present or not) when the same detection result is received several times in succession. However, this configuration requires more time to validate the detection result of the media detector, and if the user removes the recording medium from the conveyance path during this time, detecting that the recording medium was removed may not be possible.

### SUMMARY

A media processing device and a control method for a media processing device according to the invention enable reliably determining if the recording medium is removed from the media conveyance path.

The invention provides a media processing device according to the appended claim 1.

The invention reduces the effect of ambient light entering from the conveyance path entrance or exit in particular, and can reliably detect if the recording medium has been pulled out of the conveyance path by means of a simple configuration even when media detection by the media detectors is performed plural times at a specific interval to detect if a recording medium is present.

The conveyance path preferably includes a first conveyance path portion from the recording media entrance to the first conveyance rollers, a second conveyance path portion from the first conveyance rollers to the second conveyance rollers, and/or a third conveyance path portion from the second conveyance rollers to the recording media exit.

The first recording medium detector is preferably disposed to the second conveyance path portion upstream from the second recording medium detector.

The second conveyance rollers are preferably disposed to the third conveyance path portion upstream from the third recording medium detector.

The media processing device preferably further comprises a fourth recording medium detector that detects a trailing end of the recording medium inserted from the recording media entrance disposed to the first conveyance path portion.

A MICR head is preferably disposed to the first conveyance path portion.

The fourth recording medium detector is preferably disposed to the first conveyance path portion upstream from the MICR head.

At least one of the first recording medium detector, the second recording medium detector, and the third recording medium detector preferably is a photosensor including a light-emitting device and a photodetector, and preferably performs an emitter-OFF reading operation for detecting light sensed by the photodetector when the light-emitting device does not emit, and an emitter-ON reading operation for detecting light sensed by the photodetector when the light-emitting device does emit, and preferably detects if the recording medium is present based on the difference between the values detected in the emitter-OFF and emitter-ON reading operations.

This can suppress the effect of sunlight and other ambient light, and accurately detect if a recording medium is present.

The first recording medium detector, the second recording medium detector, and the third recording medium detector preferably detect if the recording medium is present at a specified sampling interval, and preferably confirm the recording medium detection result when the same detection result is received consecutively.

This can improve the accuracy of detecting if the recording medium is present even when the ambient light is strong and the difference between the emitter-ON and emitter-OFF read values is small, and can more accurately detect recording media.

The second recording medium detector is preferably disposed closer to the third recording medium detector than a pre-determined length of the recording medium in the conveyance direction.

This can accurately detect if the recording medium is present by means of the second recording medium detector or third recording medium detector detecting if the recording medium is present.

In a media processing device, the recording means has a first recording means that records on the back of the recording medium, and a second recording means that records on the front of the recording medium, the first and second recording means being preferably disposed between the first recording medium detector and the third recording medium detector with the second recording medium detector being preferably disposed between the first recording means and the second recording means. This enables efficiently arranging various parts to the conveyance path of the media processing device while also reliably detecting when the recording medium has been pulled out.

The invention provides a control method for controlling a media processing device according to the appended claim 12.

### Effect of the invention

The invention advantageously suppresses ambient light, and can therefore reliably detect if the recording medium has been pulled out of the conveyance path by means of a simple configuration even when media detection by the media detectors is performed plural times at a specific interval to detect if a recording medium is present.

Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is an exemplary external oblique view of a hybrid processing device according to a preferred embodiment of the invention.
FIG. 2 is an exemplary schematic side view of the main unit of the hybrid processing device.
FIG. 3 exemplarily shows various parts disposed to the media conveyance path.
FIG. 4 is an exemplary block diagram of the functional configuration of the hybrid processing device.
FIG. 5 is an exemplary timing chart of sensor operation.
FIG. 6 schematically describes the relative positions of the MOP sensor and a conveyed check S.
FIG. 7 is an exemplary flow chart showing the decision process.

### DESCRIPTION OF EMBODIMENTS

A preferred embodiment of the present invention is described below with reference to the accompanying figures.

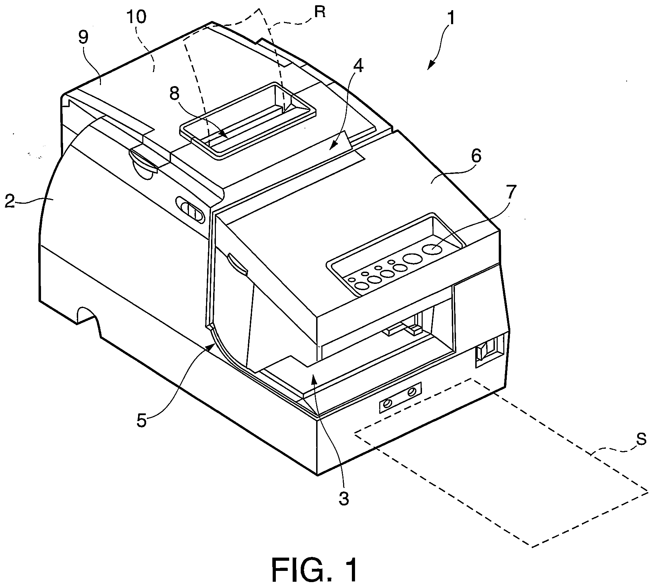

FIG. 1 is an exemplary external oblique view of a hybrid processing device as an example of a media processing device according to a preferred embodiment of the invention. This hybrid processing device (embodying a media processing device) 1 reads an MICR (magnetic ink character recognition) line of magnetic ink characters recorded on a check (embodying a recording medium, in particular a slip as a recording medium) S. Based on the result of the content, the hybrid processing device 1 performs a printing (recording) process on the check S, and performs a printing (embodying recording) process on the roll paper.

As shown in FIG. 1, the hybrid processing device 1 has a basically rectangular box-like case 2. A recording media entrance 3 for inserting a check S is disposed with a specific width transversely to the device at the front left side of the case 2. A recording media exit 4 from which the processed check S is discharged is disposed with a specific width transversely to the device in the top of the case 2 in the middle of the longitudinal direction, that is, between the front and back of the device. A media conveyance path 5 that extends from the recording media entrance 3 in a curve to the back and top is formed between the recording media entrance 3 and recording media exit 4. The recording media entrance 3, recording media exit 4, and media conveyance path 5 are formed opening to the left side of the case 2, enabling conveying a check S that is wider than the recording media entrance 3, recording media exit 4, and media conveyance path 5.

A front cover 6 covers the top of the case 2 in front of the recording media exit 4, and an operating panel 7 used to operate the hybrid processing device 1 is disposed at the front end of the front cover 6. A roll paper exit 8 from which the roll paper R (embodying a continuous recording medium) is discharged after printing is disposed with a specific width transversely to the device in the top of the case 2 behind the recording media exit 4. An access cover 9 is also disposed to the top of the case 2 behind the roll paper exit 8, and this access cover 9 is attached pivotably at the rear end thereof to the case 2. When the access cover 9 opens, the roll paper compartment 10 that stores the roll paper R is exposed and the roll paper R can be replaced. The roll paper R is a web of thermal paper wound onto a core into a roll.

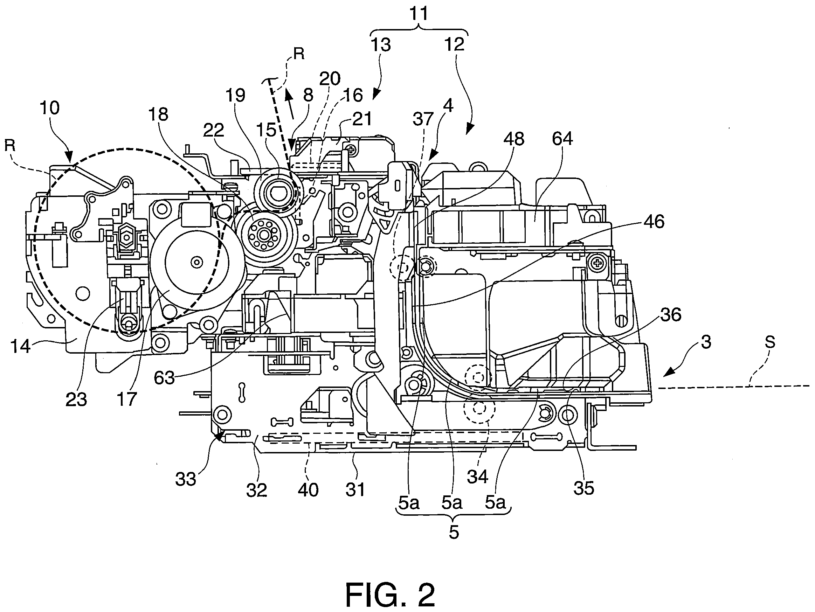

FIG. 2 is an exemplary side view showing the main unit of the hybrid processing device 1. FIG. 2 shows the hybrid processing device 1 with the case 2, front cover 6, access cover 9, and other exterior parts removed. As shown in FIG. 2, the hybrid processing device 1 has a main unit 11, and the main unit 11 includes a slip print unit 12 for printing on checks S and other slips, and a roll paper print unit 13 for printing on roll paper R, rendered in unison.

The roll paper print unit 13 includes a left side frame 14 and a paired right side frame not shown, and a roll paper holder (not shown in the figure) disposed between the side frames and forming the bottom, front, and back sides of the roll paper compartment 10. This roll paper holder holds the roll paper R so that the roll paper can rotate freely, and assures that the roll paper R can roll freely inside the roll paper compartment 10.

A platen roller 15 is disposed freely rotatably between the left and right side frames near the roll paper exit 8.

A thermal printhead 16 is disposed in front of the platen roller 15 at a position opposite the platen roller 15, and the thermal printhead 16 has a plurality of heating resistors in the face thereof opposing the platen roller 15. The leading end of the roll paper R stored in the roll paper compartment 10 is held between the platen roller 15 and the thermal printhead 16, and is conveyed toward the roll paper exit 8 by rotation of the platen roller 15. When the roll paper R passes between the platen roller 15 and thermal printhead 16, content such as text and images can be recorded on the roll paper R by heat emitted from the thermal printhead 16. A roll paper conveyance motor 17 is disposed to the left side frame 14. Rotation of the roll paper conveyance motor 17 is transferred through an intermediate gear 18 to a drive gear 19 disposed coaxially to the platen roller 15, and the platen roller 15 turns.

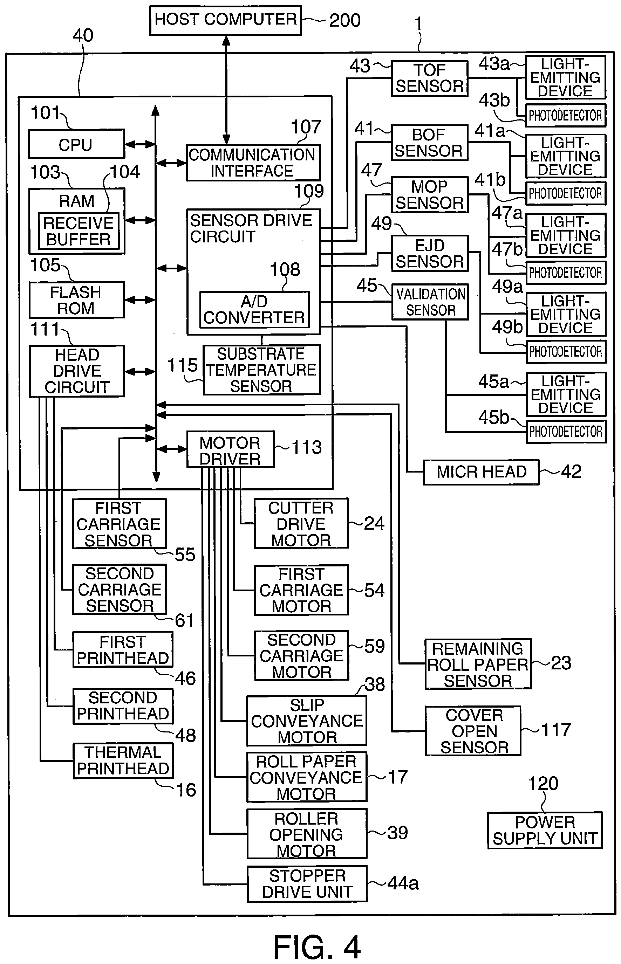

An automatic paper cutter unit 21 with an internal movable knife 20 and a cutter drive motor 24 (see FIG. 4) for operating the movable knife 20 is disposed above the platen roller 15. A fixed knife 22 is disposed behind the automatic paper cutter unit 21 with the roll paper exit 8 therebetween. The leading end part of the roll paper R passes between the movable knife 20 and fixed knife 22 to the roll paper exit 8, and when the roll paper R is cut, the cutter drive motor 24 causes the movable knife 20 to move to the back toward the fixed knife 22 and together with the fixed knife 22 cut the roll paper R.

A remaining roll paper sensor 23 that detects how much roll paper R remains inside the roll paper compartment 10 is also disposed to the left side frame 14.

As shown in FIG. 2, the slip print unit 12 has a main frame 33 including a base frame 31 and a left side frame 32 and a right side frame (not shown in the figure) that rise from the base frame 31. A pair of top and bottom paper guide members forming a bottom guide surface 35 and a top guide surface 36 are disposed to the main frame 33, and the gap between the bottom guide surface 35 and top guide surface 36 is formed as the media conveyance path 5. This media conveyance path 5 includes a horizontal conveyance path portion (first conveyance path) 5a that extends from the recording media entrance 3 horizontally toward the back of the device, a curved conveyance path portion (second conveyance path) 5b that curves upward from the back end of the horizontal conveyance path portion 5a, and a vertical conveyance path portion (third conveyance path) 5c that extends up from the top end of the curved conveyance path portion 5b and connects to the recording media exit 4.

A pair of first conveyance rollers 34 are disposed in mutual opposition to the bottom guide surface 35 and top guide surface 36 at the junction between the horizontal conveyance path portion 5a and curved conveyance path portion 5b. A pair of second conveyance rollers 37 is disposed in opposition at the bottom guide surface 35 and top guide surface 36 of the vertical conveyance path portion 5c. The first conveyance rollers 34 and the second conveyance rollers 37 rotate when driven by the slip conveyance motor 38 (FIG. 4) and convey the check S.

The first conveyance rollers 34 and second conveyance rollers 37 are configured so that one roller of each roller pair can move to and away from the other roller, and open and close the media conveyance path 5 when the roller pairs are driven together or apart by a roller opening motor 39 (FIG. 4) connected to the one roller of each pair.

A control circuit board 40 that controls overall operation of the hybrid processing device 1 based on a control program is also disposed to the base frame 31.

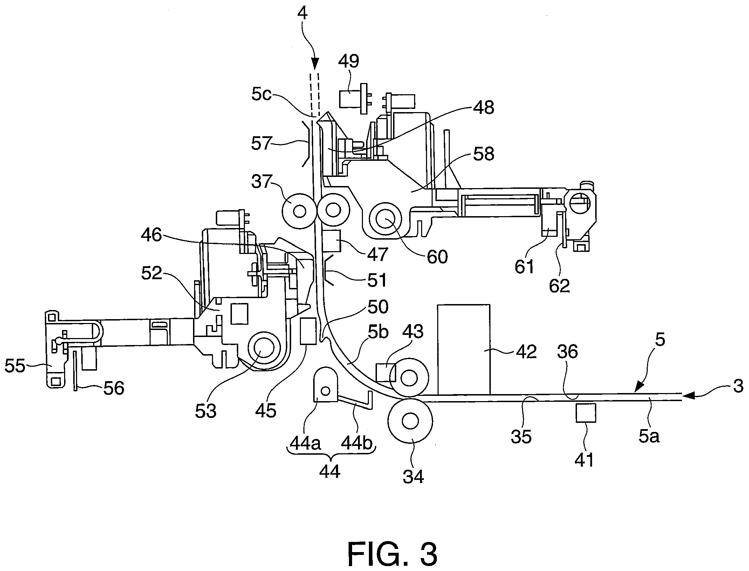

FIG. 3 exemplarily shows selected components disposed along the media conveyance path 5.

Disposed to the media conveyance path 5 in sequence from the recording media entrance 3 side are a BOF (bottom of form) sensor 41 (embodying a fourth recording medium detector), MICR head 42, first conveyance rollers 34, TOF (top of form) sensor 43 (embodying a first recording medium detector), alignment means 44, validation sensor 45, first printhead (embodying a first recording means) 46, MOP (middle of paper pass) sensor 47 (embodying a second recording medium detector), second conveyance rollers 37, second printhead (embodying a second recording means) 48, and EJD (slip ejection detector) sensor 49 (embodying a third recording medium detector).

The BOF sensor 41, TOF sensor 43, validation sensor 45, MOP sensor 47, and EJD sensor 49 are, for example, transmissive or reflective photosensors, and each includes a light-emitting device 41a, 43a, 45a, 47a, 49a (FIG. 4), and photodetector 41b, 43b, 45b, 47b, 49b (FIG. 4). Based on the amount of light detected by the respective photodetectors 41b, 43b, 45b, 47b, 49b, the sensors contactlessly detect the presence of a check S at their respective positions on the media conveyance path 5.

The BOF sensor 41 detects the trailing end of a check S inserted from the recording media entrance 3, and is disposed to the bottom guide surface 35 near the recording media entrance 3.

The TOF sensor (embodying the first recording medium detector) 43 detects the leading end of a check S inserted from the recording media entrance 3, and is disposed to the top guide surface 36 on the side closer to the paper exit than the first conveyance rollers 34.

The EJD sensor (embodying the third recording medium detector) 49 detects discharge of a check S processed by the slip print unit 12 from the recording media exit 4, and is disposed near the recording media exit 4.

The MOP sensor (embodying the second recording medium detector) 47 detects the presence of a check S conveyed through the media conveyance path 5, and is disposed to the top guide surface 36 on the side closer to the paper entrance than the second conveyance rollers 37.

The slip print unit 12 in this embodiment of the invention can perform a validation printing process that prints on a check S inserted from the recording media exit 4 by means of the first printhead 46 and second printhead 48, and then discharges the check S after printing from the recording media exit 4. As a result, a recess 50 that aligns the check S as a result of the leading end of the check S inserted from the recording media exit 4 entering the recess 50 is formed at the upper end of the curved conveyance path portion 5b of the media conveyance path 5. The validation sensor 45 detects entry of the leading end of the check S to the recess 50, and is disposed to a position opposite the recess 50.

The MICR head 42 reads magnetic ink characters recorded on the surface of a check S, and is disposed to the top guide surface 36 in the horizontal conveyance path portion 5a of the media conveyance path 5. The presence of a check S is determined based on the data read by the MICR head 42.

The alignment means 44 pauses the check S inserted from the recording media entrance 3, and is disposed on the recording media exit 4 side of the TOF sensor 43. The alignment means includes a stopper drive unit 44a such as a solenoid, for example, and a stop 44b that moves in and out of the media conveyance path 5 according to how the stopper drive unit 44a is operated, and a check S is aligned by the leading end of the check S stopping at the stop 44b.

The first printhead 46 is for printing required endorsement information required by the business, such as a customer identification number, date, and check amount, on the back side of the check S conveyed through the media conveyance path 5, and is a serial impact dot matrix (SIDM) printhead that prints by striking an ink ribbon with the recording wires to transfer ink from the ink ribbon onto the recording medium. This first printhead 46 is located at the lower end of the vertical conveyance path portion 5c of the media conveyance path 5. A first platen 51 is disposed widthwise to the main frame 33 (FIG. 2) at a position opposite the first printhead 46 with the vertical conveyance path portion 5c therebetween. The first printhead 46 is mounted on a first carriage 52 disposed on the side of the vertical conveyance path portion 5c toward the back of the device. This first carriage 52 can slide freely along a first carriage shaft 53 disposed horizontally between the side frames of the main frame 33 (FIG. 2), and can move bidirectionally along the first carriage shaft 53 when driven by the first carriage motor 54. The first carriage 52 is connected to a first carriage motor 54 by an intervening timing belt (not shown in the figure). This first carriage motor 54 is a stepper motor, and can move the first carriage 52 the distance equivalent to a desired number of steps as controlled by the control circuit board 40.

A first carriage sensor 55 that detects the position of the first carriage 52 is disposed to the bottom of the first carriage 52. This first carriage sensor 55 is a transmissive photosensor, and scans a first scale 56 disposed substantially parallel to the first carriage shaft 53 in conjunction with the bidirectional movement of the first carriage 52.

Multiple slits of a specified width are formed in this first scale 56, and displacement of the first carriage 52 is detected and the position of the first carriage 52 (first printhead 46) is detected by capturing the optical signals passing these slits as the first carriage sensor 55 scans the first scale 56. In this embodiment of the invention power is supplied to the first carriage sensor 55 only while driving the first carriage motor 54, and because power supply to the first carriage sensor 55 stops when the first carriage motor 54 stops, power consumption is reduced while waiting and reduced power consumption can be achieved.

The second printhead 48 prints the payee, date, check amount, and other essential information on the front of the check S conveyed through the media conveyance path 5, and is rendered by a SIDM printhead identically to the first printhead 46. This second printhead 48 is located above the first printhead 46, and is disposed on the side of the vertical conveyance path portion 5c to the front of the device. A second platen 57 is disposed widthwise to the main frame 33 (FIG. 2) at a position opposite the second printhead 48 with the vertical conveyance path portion 5c therebetween.

Like the first printhead 46, the second printhead 48 is carried on a second carriage 58, and this second carriage 58 can move bidirectionally along a second carriage shaft 60 as driven by a second carriage motor 59.

A second carriage sensor 61 is disposed to the bottom of the second carriage 58, and this second carriage sensor 61 scans a second scale 62 disposed substantially parallel to the second carriage shaft 60 in conjunction with bidirectional movement of the second carriage 58.

Note that the second carriage motor 59 is also rendered by a stepper motor similarly to the first carriage motor 54.

A first ink ribbon cassette 63 (FIG. 2) and a second ink ribbon cassette 64 (FIG. 2) that store the ink ribbons that are conveyed respectively between the first printhead 46 and first platen 51 and the second printhead 48 and second platen 57 are removably installed to the main frame 33.

FIG. 4 is an exemplary block diagram showing the functional configuration of the hybrid processing device 1.

As shown in FIG. 4, the control system of the hybrid processing device 1 includes various drive units such as motors and various sensors connected to a control unit mounted on the control circuit board 40.

The control circuit board 40 includes a CPU 101 (embodying a decision unit) that executes a control program and controls other parts; RAM 103 that temporarily stores processed data and the programs executed by the CPU 101; flash ROM 105 that stores settings and the basic control program executed by the CPU 101; a communication interface 107 that communicates commands and data with a host computer 200 as an external device connected to the hybrid processing device 1; a sensor drive circuit 109 that has an internal A/D converter 108 and converts output from the sensors of the hybrid processing device 1 to digital data and outputs to the CPU 101; a head drive circuit 111 that drives the printheads of the hybrid processing device 1; and a motor driver 113 that drives the motors of the hybrid processing device 1. These parts are communicably connected to each other. Note, further, that how the various functional parts of the control circuit board 40 are specifically rendered can be determined as desired, including rendering individual units as discrete semiconductor devices, and rendering the functions of plural functional parts using a system-on-a-chip (SOC) design.

A substrate temperature sensor 115 that detects the temperature of the motor driver 113 is mounted on the control circuit board 40. The substrate temperature sensor 115 is a thermistor disposed on the back side of the control circuit board 40 where the motor driver 113 is mounted, or near the motor driver 113.

A remaining roll paper sensor 23 that detects if the amount of roll paper R stored in the roll paper compartment 10 (FIG. 1) exceeds a particular amount, a cover open sensor 117 that detects if the access cover 9 is open, and the first carriage sensor 55 and second carriage sensor 61 described above, are connected to the CPU 101.

The remaining roll paper sensor 23 is a switch that turns on when the outside diameter of the roll paper R is greater than or equal to a set size, the cover open sensor 117 is a switch that turns on when the access cover 9 opens, and both sensors change the output value to high or low according to the respective on/off state. The first carriage sensor 55 and second carriage sensor 61 are rendered as photo interrupters, for example, and switch the output HIGH/LOW according to whether or not the amount of light detected by the light receiving unit exceeds an internally stored threshold value.

The CPU 101 controls parts mounted on the control circuit board 40 by reading and executing the basic control program stored in flash ROM 105. Based on the sensor values input through the sensor drive circuit 109, and the output values of the remaining roll paper sensor 23, cover open sensor 117, first carriage sensor 55, and second carriage sensor 61, the CPU 101 performs operations including monitoring the operating status of the hybrid processing device 1, driving the heads by means of the head drive circuit 111, operating the motors by means of the motor driver 113, printing on the front and back sides of the check S, reading the MICR line, and printing on the roll paper R.

RAM 103 is used as working memory for temporarily storing programs and data used for CPU 101 operation. A receive buffer 104 that temporarily stores commands and data received from the host computer 200 through the communication interface 107 is provided in RAM 103. The CPU 101 reads and executes the commands stored in the receive buffer 104 in the order received.

The sensor drive circuit 109 is connected to the BOF sensor 41, TOF sensor 43, validation sensor 45, MOP sensor 47, EJD sensor 49, and substrate temperature sensor 115, converts the sensor output values to digital data, and outputs the digital data to the CPU 101. The sensor drive circuit 109 is also connected to the MICR head 42, and outputs the output values of the MICR head 42 as digital data to the CPU 101 while reading the magnetic ink characters printed on the check S by means of the MICR head 42.

The head drive circuit 111 records on a check S by energizing the solenoid coils of the first printhead 46 and second printhead 48 to make the recording wires strike the ink ribbon as controlled by the CPU 101. The head drive circuit 111 also energizes the heating elements (not shown in the figure) of the thermal printhead 16 as controlled by the CPU 101 to apply heat to and record on the recording surface of the roll paper R.

The motor driver 113 outputs drive power and drive pulses as controlled by the CPU 101 to the roll paper conveyance motor 17, cutter drive motor 24, slip conveyance motor 38, roller opening motor 39, stopper drive unit 44a, first carriage motor 54, and second carriage motor 59, which are stepper motors. The drive power supplied to the motors by the motor driver 113 is 24-VDC power supplied from the power supply unit 120 to the different parts. The power supply unit 120 supplies DC power to the drive units of the hybrid processing device 1 shown in FIG. 4, that is, the printheads (first printhead 46, second printhead 48, and thermal printhead 16), motors (cutter drive motor 24, first carriage motor 54, second carriage motor 59, slip conveyance motor 38, roll paper conveyance motor 17, and roller opening motor 39), the stopper drive unit 44a, and the control circuit board 40. Power is also supplied from the power supply unit 120 to the sensors of the hybrid processing device 1 through the control circuit board 40, or through the sensor drive circuit 109 mounted on the control circuit board 40.

This hybrid processing device 1 enters a standby mode after the power turns on. In this standby mode the hybrid processing device 1 moves the first conveyance rollers 34 and second conveyance rollers 37 to the open position by means of the roller opening motor 39, and a check S can be inserted to the recording media entrance 3. The stop 44b is also moved into the media conveyance path 5 by means of the stopper drive unit 44a.

When insertion of a check S from the recording media entrance 3 is detected in this standby state, the CPU 101 detects the check S based on the output value of the BOF sensor 41 input from the sensor drive circuit 109. The CPU 101 then controls the motor driver 113 to drive the roller opening motor 39 and move the first conveyance rollers 34 and second conveyance rollers 37 to the closed position so that the check S is held by the first conveyance rollers 34.

With the stop 44b intervening in the media conveyance path 5, the CPU 101 then operates the slip conveyance motor 38 and rotationally drives the first conveyance rollers 34 to align the check S by moving it back and forth plural times. This operation drives the check S against the stop 44b and aligns its orientation.

When reading magnetic ink characters is instructed by a command received from the host computer 200, the CPU 101 drives the stopper drive unit 44a and retracts the stop 44b from the media conveyance path 5.

The CPU 101 then reads the magnetic ink characters on the check S based on output values from the MICR head 42 while conveying the check S by means of the first conveyance rollers 34.

When printing on the back of the check S is instructed by a command received from the host computer 200, the CPU 101 conveys the check S to the printing position and then prints on the back of the check S by means of the first printhead 46.

When printing on the front of the check S is instructed by a command received from the host computer 200, the CPU 101 conveys the check S to the front printing position. More specifically, the CPU 101 conveys the check S to the printing position by driving the slip conveyance motor 38 forward and conveying the check S to the downstream side of the media conveyance path 5, or reversing the slip conveyance motor 38 and conveying the check S to the upstream side of the media conveyance path 5 according to the printing position on the check S. After the check S reaches the front printing position, the CPU 101 controls the head drive circuit 111 and prints on the front of the check S by means of the second printhead 48.

After printing the check front ends, the CPU 101 drives the slip conveyance motor 38 and conveys the check S to where it can be discharged from the recording media exit 4 by means of the second conveyance rollers 37.

The check S reaches the position protruding from the recording media exit 4 at this time, but the trailing end of the check S is still inside the recording media exit 4 and the presence of the check S is detected by the EJD sensor 49. The CPU 101 waits until the operator removes the check S, and when the check S is removed and the CPU 101 detects the change in the detection state of the EJD sensor 49, the CPU 101 drives the roller opening motor 39 and stopper drive unit 44a, and returns to the standby mode described above. As a result, the magnetic ink characters are read and the front and back of the check S are printed when a check S is inserted.

When a check S is inserted from the recording media exit 4 in the standby mode and the leading end thereof reaches the recess 50, the CPU 101 detects insertion of a check S based on change in the output from the validation sensor 45. The CPU 101 then performs a validation printing process on the check S using the first printhead 46 or second printhead 48 according to a print command received from the host computer 200. When printing is completed, the CPU 101 waits for the operator to remove the check S. When removal of the check S is detected based on change in output from the validation sensor 45 and EJD sensor 49, the CPU 101 returns to the standby mode.

When a command for printing on roll paper R is received from the host computer 200, the CPU 101 reads and executes the command from the receive buffer 104. The CPU 101 prints by energizing the thermal printhead 16 and applying heat to the printing surface of the roll paper R while driving the roll paper conveyance motor 17 and conveying the roll paper R. When printing is completed, the CPU 101 conveys the roll paper R until the end of printing position on the roll paper R is at the automatic paper cutter unit 21, and then drives the cutter drive motor 24 to cut the roll paper R.

As described above, photosensors including a BOF sensor 41, TOF sensor 43, validation sensor 45, MOP sensor 47, and EJD sensor 49 are disposed to the media conveyance path 5 in the hybrid processing device 1 according to this embodiment of the invention. Depending on the installation conditions of the hybrid processing device 1, ambient light from the sun or other source can enter from the recording media entrance 3 or recording media exit 4, and this ambient light may be picked up by the photodetector of each photosensor assembly. As a result, a check S may be mistakenly detected as present even though there is no check S in the media conveyance path 5.

To solve this problem, each sensor in this embodiment of the invention repeats an emitter-OFF read operation and an emitter-ON read operation at a specific time interval T1 (such as 20 msec). This emitter-OFF read operation detects the amount of light sensed by the photodetector when the light-emitting device (LED) does not emit, and the emitter-ON read operation detects the amount of light sensed by the photodetector when the LED emits. The specific time T2 required to execute the emitter-OFF read and emitter-ON read operations is therefore 40 msec in this embodiment of the invention. The average of two values detected a specific time apart (such as 300 µsec) is used for the emitter-OFF read and emitter-ON read operations.

The presence of a check S is then detected based on the difference between the emitter-OFF read and emitter-ON read values. These operations are performed by the sensor drive circuit 109 as controlled by the CPU (embodying the decision means) 101. This configuration performs an emitter-OFF read to detect the amount of light sensed by the photodetector when the LED does not emit, and an emitter-ON read to detect the amount of light sensed by the photodetector when the LED emits, and detects whether or not a check S is present based on the difference between the emitter-OFF and emitter-ON read values. This embodiment of the invention can therefore better suppress the effect of ambient light and detect if a check S is present with better precision than a configuration of the related art that detects if a check S is present based on the light detected by a photodetector when a LED emits.

This embodiment of the invention also repeats detecting if a check S is present based on the difference between the emitter-OFF and emitter-ON read values plural times, and detects the presence of a check S based on whether the same result is obtained twice consecutively. Detecting the presence of a check S based on the difference between these emitter-OFF and emitter-ON values suppresses the effect of ambient light as described above, and enables accurately detecting if a check S is present.

However, if the ambient light is strong and the difference between the emitter-OFF read and emitter-ON read values is small, determining if a check S is present can be difficult. As a result, instead of deciding if a check S is present based on a single detection value, the check S detection operation is performed plural times, and a check S is determined to be present if the same result is obtained twice consecutively. This improves the accuracy of the check S presence detection when the ambient light is strong and the difference between the emitter-OFF and emitter-ON read values is small, and enables more reliably detecting a check S.

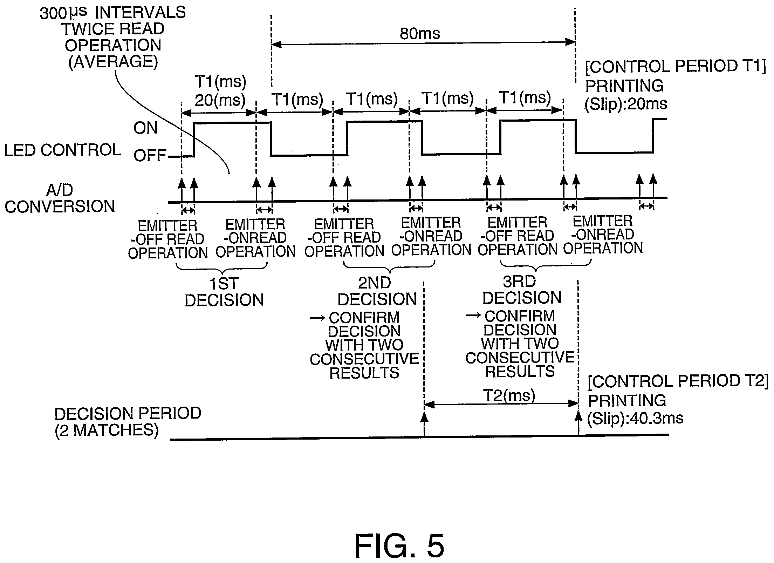

This embodiment of the invention can thus suppress the effect of ambient light and accurately detect if a check S is present. However, because the result (whether a check S is present or not) is confirmed if the same OFF and ON detection results are obtained twice consecutively, a maximum of 80 msec (see FIG. 5) or twice T2 is required to confirm the detection result of each sensor. Furthermore, because the check S is conveyed at a specified conveyance speed (195 mm/sec) even while the detection result is unconfirmed, and detection of the check S conveyed through the media conveyance path 5 is not confirmed during this time, the check S will be conveyed a maximum 15.6 mm (corresponding to 195 [mm/sec] x 0.08 [sec]) during this time. The leading end of the check S is also protruding from the recording media exit 4 at this time, and if the user removes the check S from the conveyance path while detection is unconfirmed, detecting removal of the check S may not be possible.

As a result, the MOP sensor 47 described above is disposed to the media conveyance path 5 to enable detecting removal of a check S in this embodiment of the invention.

The MOP sensor 47 is disposed to the vertical conveyance path portion 5c of the media conveyance path 5 between the first printhead 46 and second printhead 48. By disposing the MOP sensor 47 between the first printhead 46 and second printhead 48, different parts can be efficiently arranged along the media conveyance path 5 of the hybrid processing device 1, and removal of a check S can be reliably detected.

The operation determining removal of a check S is described next.

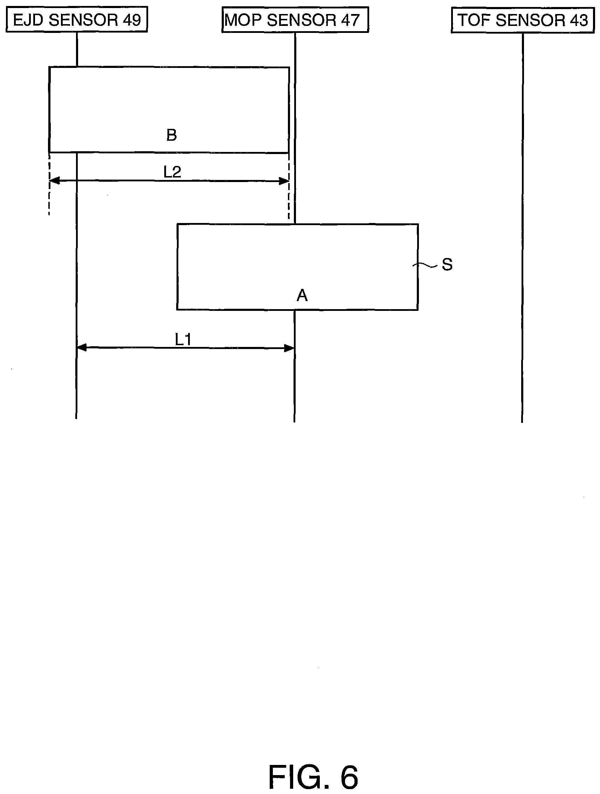

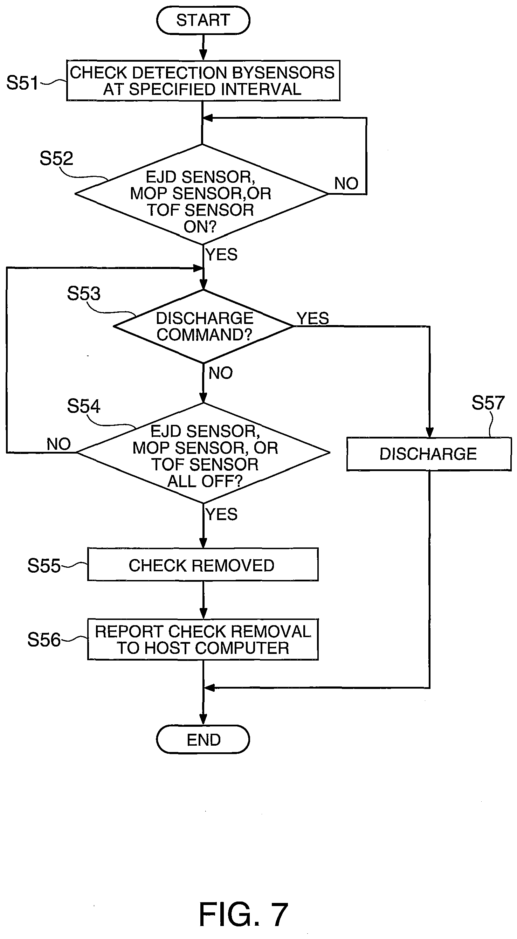

FIG. 6 schematically describes the relative positions of the MOP sensor 47 and the conveyed check S, and FIG. 7 is an exemplary flow chart of the decision process.

As shown in FIG. 6, the MOP sensor 47 is located between the TOF sensor 43 and EJD sensor 49, and is more specifically disposed so that the distance L1 to the EJD sensor 49 is shorter than the length L2 (e.g. 63 mm in this embodiment of the invention) in the conveyance direction of the shortest check S that is processed by the hybrid processing device 1.

The CPU 101 first drives the sensor drive circuit 109 to detect a check S by means of the sensors (step S51). In this case the sensor drive circuit 109 executes the emitter-OFF read and emitter-ON read operations at time T1, and outputs the results to the CPU 101.

The CPU 101 then determines if the MOP sensor 47, TOF sensor 43, or EJD sensor 49 is on (step S52).

If the MOP sensor 47 is ON, a check S has been conveyed to the MOP sensor 47 as shown by A in FIG. 6, the MOP sensor 47 has detected the check S, and the decisions based on the emitter-OFF and emitter-ON read values indicate twice consecutively that a check S is present. An ON signal from the other sensors indicates a similar state, and an OFF signal indicates that the decisions based on the emitter-OFF and emitter-ON read values twice consecutively indicate that a check S is not present.

If none of the media detection sensors including the MOP sensor 47, TOF sensor 43, and EJD sensor 49 is on (step S52 returns No), the process repeats until a sensor turns on, and if any sensor is on (step S52 returns Yes), the process goes to step S53.

If only the MOP sensor 47 detects a check S, the leading end of the check S is not protruding from the recording media exit 4 (FIG. 3) and the check S cannot be pulled out.

If a command for discharging the check S is received from the host computer 200 (step S53 returns Yes), the CPU 101 reads the command from receive buffer 104 and performs a check S discharge operation (step S57).

If a command for discharging the check S is not received from the host computer 200 (step S53 returns No), the CPU 101 determines if the MOP sensor 47, TOF sensor 43, and EJD sensor 49 are all OFF (step S54). If all of these sensors are not off (step S54 returns No), the process repeats until they turn off. When all sensors are off (step S54 returns Yes), the process goes to step S55.

When the MOP sensor 47, TOF sensor 43, and EJD sensor 49 are all off, the trailing end of the check S is removed from the MOP sensor 47, and removal of the check S can be detected (step S55).

Because the distance L1 between the MOP sensor 47 and EJD sensor 49 is less than the length L2 of the check S in this embodiment of the invention, the leading end of the check S can normally be detected by the EJD sensor 49 even if the trailing end of the check S separates from the MOP sensor 47.

However, because changing from a state in which the MOP sensor 47 is on and a check S is detected to a state in which the MOP sensor 47, TOF sensor 43, and EJD sensor 49 are all off and a check S cannot be detected is normally not possible, removal of a check S from the media conveyance path 5 can be detected.

The MOP sensor 47 is disposed so that it can reliably detect removal of a check S that is shorter than the distance between the TOF sensor 43 and the EJD sensor 49 on the media conveyance path 5. As a result, detecting removal of a check S based on a state change from a state in which the MOP sensor 47 is on to a state in which the MOP sensor 47, TOF sensor 43, and EJD sensor 49 are all off is therefore desirable. This enables reliably determining if the check S was discharged from the recording media exit 4 in conjunction with normal operation, or was pulled out while printing.

If it is determined that the check S was pulled out (step S55), the CPU 101 sends a status report telling the host computer 200 that the check was pulled out (step S56).

As described above, a hybrid processing device 1 having a printhead 48 that records on a check S conveyed through a media conveyance path 5 also has a TOF sensor 43 that detects insertion of a check S from the recording media entrance 3 of the media conveyance path 5, an EJD sensor 49 that detects if a check S is discharged from the recording media exit 4 of the media conveyance path 5, and a MOP sensor 47 that detects if a check S is present between the TOF sensor 43 and the EJD sensor 49. If there is a change from a state in which at least one of the TOF sensor 43, MOP sensor 47, and EJD sensor 49 detects a check S, to a state in which the TOF sensor 43, MOP sensor 47, and EJD sensor 49 all do not detect a check S, the CPU 101 can determined that the check S was pulled out of the media conveyance path 5, and can reliably determine when the check S is removed by means of a simple configuration.

In this embodiment of the invention, the TOF sensor 43, MOP sensor 47, and EJD sensor 49 respectively have a light-emitting device 43a, 47a, 49a and a photodetector 43b, 47b, 49b, and perform an emitter-OFF read operation that detects the light detected by the respective photodetector 43b, 47b, 49b when the light-emitting device 43a, 47a, 49a does not emit, and an emitter-ON read operation that detects the light detected by the respective photodetector 43b, 47b, 49b when the light-emitting device 43a, 47a, 49a emits. Because the presence of a check S is detected based on the difference between these emitter-OFF read and emitter-ON read values, the effect of ambient light from the sun, for example, can be suppressed, and presence of a check S can be accurately detected.

In this embodiment of the invention the TOF sensor 43, MOP sensor 47, and EJD sensor 49 detect check S presence at a specific interval T2, and confirm the check S presence detection if the same detection result is obtained twice consecutively. As a result, the accuracy of check S presence detection can be improved and checks S can be detected more reliably even if the ambient light is strong and the difference between the emitter-OFF and emitter-ON detection values is small.

Furthermore, because the MOP sensor 47 is located a distance L1, which is shorter than the length L2 in the conveyance direction of the processed check S conveyed through the media conveyance path 5, from the EJD sensor 49, the presence of a check S can usually be reliably detected from detection of a check S by the MOP sensor 47 or EJD sensor 49.

In this embodiment of the invention the first printhead 46 for printing on the back of a check S, and the second printhead 48 for printing on the front of a check S, are disposed to the vertical conveyance path portion 5c of the media conveyance path 5 between the TOF sensor 43 and the EJD sensor 49. Because the MOP sensor 47 is disposed between the first printhead 46 and the second printhead 48, other parts can be efficiently disposed to the media conveyance path 5 of the hybrid processing device 1, and pulling a check S out can be reliably detected.

A preferred embodiment of the invention is described above, but the invention is not so limited. For example, the hybrid processing device in the embodiment described above has a roll paper print unit 13 that prints on roll paper R, but the invention can also be applied to a configuration having a slip print unit 12.

In addition, the slip print unit 12 in this embodiment of the invention is configured with a dot impact printhead, but the invention can also be used with other types of printheads that are driven mounted on a carriage, including inkjet printheads.

In addition, a program that causes the CPU 101 to perform the operation in the flow chart described above can be stored to and read and executed from a recording medium in the hybrid processing device 1 or a storage medium that is externally connected.

## Claims

1. A media processing device comprising:
recording means (46, 48) for recording on a recording medium (S) which is conveyed through a conveyance path (5);
a recording media entrance (3) from which the recording medium (S) is to be inserted;
a recording media exit (4) from which the recording medium (S) is to be discharged;
a pair of first conveyance rollers (34) for conveying the recording medium (S) inserted from the recording media entrance (3);
a pair of second conveyance rollers (37) for discharging the recording medium (S) from the recording media exit (4);
a first recording medium detector (43) that is disposed to the conveyance path (5) on the downstream side of the first conveyance rollers (34), and is configured to detect insertion of the recording medium (S) from the recording media entrance (3);
a second recording medium detector (47) that is disposed to the conveyance path (5) on the upstream side of the second conveyance rollers (37), and is configured to detect if the recording medium (S) is present; and a third recording medium detector (49) that is disposed on the downstream side of the recording media exit (4) adjacent to a line extending from the conveyance path (5), and is configured to detect discharge of the recording medium (S) from the recording media exit (4);
**characterized by** further comprising decision means (101) for determining that the recording medium (S) was removed from the conveyance path (5) when a state in which at least one of the first recording medium detector (43), the second recording medium detector (47), and third recording medium detector (49) detects the recording medium (S) changes to a state in which all of the first to third recording medium detectors (43, 47, 49) do not detect the recording medium (S).

2. The media processing device described in claim 1, wherein:
the conveyance path (5) includes a first conveyance path portion (5a) from the recording media entrance (3) to the first conveyance rollers (34), a second conveyance path portion (5b) from the first conveyance rollers (34) to the second conveyance rollers (37), and a third conveyance path portion (5c) from the second conveyance rollers (37) to the recording media exit (4).

3. The media processing device described in claim 2, wherein:
the first recording medium detector (43) is disposed to the second conveyance path portion (5b) upstream from the second recording medium detector (47).

4. The media processing device described in claim 2 or 3, wherein:
the second conveyance rollers (37) are disposed to the third conveyance path portion (5c) upstream from the third recording medium detector (49).

5. The media processing device described in at least one of claims 2 to 4, further comprising:
a fourth recording medium detector (41) for detecting a trailing end of the recording medium (S) inserted from the recording media entrance (3) disposed to the first conveyance path portion (5a).

6. The media processing device described in at least one of claims 2 to 5, further comprising:
an MICR head (42) disposed to the first conveyance path portion (5a).

7. The media processing device described in claims 5 and 6, wherein:
the fourth recording medium detector (41) is disposed to the first conveyance path portion (5a) upstream from the MICR head (42).

8. The media processing device described in at least one of claims 1 to 7, wherein:
at least one of the first recording medium detector (43), the second recording medium detector (47), and the third recording medium detector (49) is a photosensor including a light-emitting device and a photodetector, and is configured to:
- perform an emitter-OFF reading operation for detecting light sensed by the photodetector when the light-emitting device does not emit, and an emitter-ON reading operation for detecting light sensed by the photodetector when the light-emitting device does emit, and
- detect if the recording medium (S) is present based on the difference between the values detected in the emitter-OFF and emitter-ON reading operations.

9. The media processing device described in at least one of claims 1 to 8, wherein:
the first recording medium detector (43), the second recording medium detector (47), and the third recording medium detector (49) are configured to detect if the recording medium (S) is present at a specified time interval, and to confirm the recording medium detection result when the same detection result is received consecutively.

10. The media processing device described in at least one of claims 1 to 9, wherein:
the second recording medium detector (47) is disposed closer to the third recording medium detector (49) than a pre-determined length of the recording medium (S) in the conveyance direction.

11. The media processing device described in at least one of claims 1 to 10, wherein
the recording means (46, 48) comprises:
first recording means (46) for recording on the back of the recording medium (S), and
second recording means (48) for recording on the front of the recording medium (S), the first and second recording means (46, 48) being disposed between the first recording medium detector (43) and the third recording medium detector (49) with the second recording medium detector (47) being disposed between the first recording means (46) and the second recording means (48).

12. A control method for controlling a media processing device (1) including
recording means (46, 48) for recording on a recording medium (S) which is conveyed through a conveyance path (5),
a recording media entrance (3) from which the recording medium (S) is to be inserted,
a recording media exit (4) from which the recording medium (S) is to be discharged,
a pair of first conveyance rollers (34) for conveying the recording medium (S) inserted from the recording media entrance (3),
a pair of second conveyance rollers (37) for discharging the recording medium (S) from the recording media exit (4),
a first recording medium detector (43) that is disposed to the conveyance path (5) on the downstream side of the first conveyance rollers (34), and is configured to detect insertion of the recording medium (S) from the recording media entrance (3),
a second recording medium detector (47) that is disposed to the conveyance path (5) on the upstream side of the second conveyance rollers (37), and is configured to detect if the recording medium (S) is present, and
a third recording medium detector (49) that is disposed on the downstream side of the recording media exit (4) adjacent to a line extending from the conveyance path (5), and is configured to detect discharge of the recording medium (S) from the recording media exit (4),
the method **characterized by** comprising a step of determining that the recording medium (S) was removed from the conveyance path (5) when a state in which at least one of the first recording medium detector (43), the second recording medium detector (47), and the third recording medium detector (49) detects the recording medium (S) changes to a state in which all of the first to third recording medium detectors (43, 47, 49) do not detect the recording medium (S).

13. The control method described in claim 12, wherein:
at least one of the first recording medium detector (43), the second recording medium detector (47), and the third recording medium detector (49) is a photosensor including a light-emitting device and a photodetector, the method further comprising:
performing an emitter-OFF reading operation for detecting light sensed by the photodetector when the light-emitting device does not emit, and an emitter-ON reading operation for detecting light sensed by the photodetector when the light-emitting device does emit, and
detecting if the recording medium (S) is present based on the difference between the values detected in the emitter-OFF and emitter-ON reading operations.

14. The control method described in claim 12 or 13, wherein:
the first recording medium detector (43), the second recording medium detector (47), and the third recording medium detector (49) are configured to detect if the recording medium (S) is present at a specified time interval, and to confirm the recording medium detection result when the same detection result is received continuously.

## Patentansprüche

1. Medienverarbeitungsvorrichtung, die umfasst:
ein Aufzeichnungsmittel (46, 48) zum Aufzeichnen auf einem Aufzeichnungsmedium (S), das über einen Beförderungsweg (5) befördert wird;
einen Aufzeichnungsmediumeinlass (3), bei dem das Aufzeichnungsmedium (S) einzusetzen ist;
einen Aufzeichnungsmediumaustritt (4), aus dem das Aufzeichnungsmedium (S) auszugeben ist;
ein Paar erster Beförderungswalzen (34) zum Befördern des Aufzeichnungsmediums (S), das beim Aufzeichnungsmediumeinlass (3) eingesetzt wurde;
ein Paar zweite Beförderungswalzen (37) zum Ausgeben des Aufzeichnungsmediums (S) aus dem Aufzeichnungsmediumaustritt (4);
einen ersten Aufzeichnungsmediumdetektor (43), der zum Beförderungsweg (5) auf der nachgeschalteten Seite der ersten Beförderungswalzen (34) angeordnet und so konfiguriert ist, dass er das Einsetzen des Aufzeichnungsmediums (S) beim Aufzeichnungsmediumeinlass (3) detektiert;
einen zweiten Aufzeichnungsmediumdetektor (47), der zum Beförderungsweg (5) auf der vorgeschalteten Seite der zweiten Beförderungswalzen (37) angeordnet und so konfiguriert ist, dass er detektiert, ob das Aufzeichnungsmedium (S) vorhanden ist; und
einen dritten Aufzeichnungsmediumdetektor (49), der auf der nachgeschalteten Seite des Aufzeichnungsmediumaustritts (4) einer Linie benachbart angeordnet ist, die sich vom Beförderungsweg (5) erstreckt, und so konfiguriert ist, dass er das Ausgeben des Aufzeichnungsmediums (S) aus dem Aufzeichnungsmediumaustritt (4) detektiert;
**dadurch gekennzeichnet, dass** sie ferner umfasst:
ein Entscheidungsmittel (101) zum Ermitteln, dass das Aufzeichnungsmedium (S) aus dem Beförderungsweg (5) entfernt wurde, wenn ein Zustand, in dem zumindest eines des ersten Aufzeichnungsmediumdetektors (43), des zweiten Aufzeichnungsmediumdetektors (47) und des dritten Aufzeichnungsmediumdetektors (49) das Aufzeichnungsmedium (S) detektiert, in einen Zustand wechselt, in dem keiner der ersten bis dritten Aufzeichnungsmediumdetektoren (43, 47, 49) das Aufzeichnungsmedium (S) detektiert.

2. Medienverarbeitungsvorrichtung nach Anspruch 1, wobei:
der Beförderungsweg (5) einen ersten Beförderungswegabschnitt (5a) vom Aufzeichnungsmediumeinlass (3) zu den ersten Beförderungswalzen (34), einen zweiten Beförderungswegabschnitt (5b) von den ersten Beförderungswalzen (34) zu den zweiten Beförderungswalzen (37) und einen dritten Beförderungswegabschnitt (5c) von den zweiten Beförderungswalzen (37) zum Aufzeichnungsmediumaustritt (4) umfasst.

3. Medienverarbeitungsvorrichtung nach Anspruch 2, wobei:
der erste Aufzeichnungsmediumdetektor (43) zum zweiten Beförderungswegabschnitt (5b) dem zweiten Aufzeichnungsmediumdetektor (47) vorgeschaltet angeordnet ist.

4. Medienverarbeitungsvorrichtung nach Anspruch 2 oder 3, wobei:
die zweiten Beförderungswalzen (37) zum dritten Beförderungswegabschnitt (5c) dem dritten Aufzeichnungsmediumdetektor (49) vorgeschaltet angeordnet sind.

5. Medienverarbeitungsvorrichtung nach zumindest einem der Ansprüche 2 bis 4, die ferner umfasst:
einen vierten Aufzeichnungsmediumdetektor (41) zum Detektieren eines nachlaufenden Endes des Aufzeichnungsmediums (S), das beim Aufzeichnungsmediumeinlass (3) eingesetzt wurde, der zum ersten Beförderungswegabschnitt (5a) angeordnet ist.

6. Medienverarbeitungsvorrichtung nach zumindest einem der Ansprüche 2 bis 5, die ferner umfasst:
einen MICR-Kopf (42), der zum ersten Beförderungswegabschnitt (5a) angeordnet ist.

7. Medienverarbeitungsvorrichtung nach Anspruch 5 und 6, wobei:
der vierte Aufzeichnungsmediumdetektor (41) zum ersten Beförderungswegabschnitt (5a) dem MICR-Kopf (42) vorgeschaltet angeordnet ist.

8. Medienverarbeitungsvorrichtung nach zumindest einem der Ansprüche 1 bis 7, wobei:
zumindest einer des ersten Aufzeichnungsmediumdetektors (43), des zweiten Aufzeichnungsmediumdetektors (47) und des dritten Aufzeichnungsmediumdetektors (49) ein Photosensór ist, der eine lichtemittierende Vorrichtung und einen Photodetektor umfasst und der konfiguriert ist zum:
- Durchführen eines Emitter-AUS-Lesebetriebs zum Detektieren von Licht, das vom Photodetektor erfasst wird, wenn die lichtemittierende Vorrichtung nicht emittiert, und eines Emitter-EIN-Lesebetriebs zum Detektieren von Licht, das vom Photodetektor erfasst wird, wenn die lichtemittierende Vorrichtung emittiert, und
- Detektieren, ob das Aufzeichnungsmedium (S) vorhanden ist, auf Basis des Unterschieds zwischen den Werten, die in den Emitter-AUS- und Emitter-EIN-Lesebetrieben detektiert wurden.

9. Medienverarbeitungsvorrichtung nach zumindest einem der Ansprüche 1 bis 8, wobei:
der erste Aufzeichnungsmediumdetektor (43), der zweite Aufzeichnungsmediumdetektor (47) und der dritte Aufzeichnungsmediumdetektor (49) so konfiguriert sind, dass sie detektieren, ob das Aufzeichnungsmedium (S) vorhanden ist, in einem spezifizierten Zeitintervall, und dass sie das Aufzeichnungsmediumdetektionsergebnis bestätigen, wenn das gleiche Detektionsergebnis hintereinander erhalten wird.

10. Medienverarbeitungsvorrichtung nach zumindest einem der Ansprüche 1 bis 9, wobei:
der zweite Aufzeichnungsmediumdetektor (47) näher zum dritten Aufzeichnungsmediumdetektor (49) als eine vordefinierte Länge des Aufzeichnungsmediums (S) in der Beförderungsrichtung angeordnet ist.

11. Medienverarbeitungsvorrichtung nach zumindest einem der Ansprüche 1 bis 10, wobei:
das Aufzeichnungsmedium (46, 48) umfasst:
ein erstes Aufzeichnungsmittel (46) zum Aufzeichnen auf der Rückseite des Aufzeichnungsmediums (S), und
ein zweites Aufzeichnungsmittel (48) zum Aufzeichnen auf der Vorderseite des Aufzeichnungsmediums (S),
wobei das erste und das zweite Aufzeichnungsmittel (46, 48) zwischen dem ersten Aufzeichnungsmediumdetektor (43) und dem dritten Aufzeichnungsmediumdetektor (49) angeordnet sind, wobei der zweite Aufzeichnungsmediumdetektor (47) zwischen dem ersten Aufzeichnungsmittel (46) und dem zweiten Aufzeichnungsmittel (48) angeordnet ist.

12. Steuerverfahren zum Steuern einer Medienverarbeitungsvorrichtung (1), das umfasst:
ein Aufzeichnungsmittel (46, 48) zum Aufzeichnen auf einem Aufzeichnungsmedium (S), das über einen Beförderungsweg (5) befördert wird,
einen Aufzeichnungsmediumeinlass (3), bei dem das Aufzeichnungsmedium (S) einzusetzen ist;
einen Aufzeichnungsmediumaustritt (4), aus dem das Aufzeichnungsmedium (S) auszugeben ist;
ein Paar erster Beförderungswalzen (34) zum Befördern des Aufzeichnungsmediums (S), das beim Aufzeichnungsmediumeinlass (3) eingesetzt wurde,
ein Paar zweite Beförderungswalzen (37) zum Ausgeben des Aufzeichnungsmediums (S) aus dem Aufzeichnungsmediumaustritt (4),
einen ersten Aufzeichnungsmediumdetektor (43), der zum Beförderungsweg (5) auf der nachgeschalteten Seite der ersten Beförderungswalzen (34) angeordnet und so konfiguriert ist, dass er das Einsetzen des Aufzeichnungsmediums (S) beim Aufzeichnungsmediumeinlass (3) detektiert,
einen zweiten Aufzeichnungsmediumdetektor (47), der zum Beförderungsweg (5) auf der vorgeschalteten Seite der zweiten Beförderungswalzen (37) angeordnet und so konfiguriert ist, dass er detektiert, wenn das Aufzeichnungsmedium (S) vorhanden ist, und
einen dritten Aufzeichnungsmediumdetektor (49), der auf der nachgeschalteten Seite des Aufzeichnungsmediumaustritts (4) einer Linie benachbart angeordnet ist, die sich vom Beförderungsweg (5) erstreckt, und so konfiguriert ist, dass er das Ausgeben des Aufzeichnungsmediums (S) aus dem Aufzeichnungsmediumaustritt (4) detektiert,
wobei das Verfahren **dadurch gekennzeichnet ist,**
**dass** es einen Schritt zum Ermitteln umfasst, dass das Aufzeichnungsmedium (S) aus dem Beförderungsweg (5) entfernt wurde, wenn ein Zustand, in dem zumindest eines des ersten Aufzeichnungsmediumdetektors (43), des zweiten Aufzeichnungsmediumdetektors (47) und des dritten Aufzeichnungsmediumdetektors (49) das Aufzeichnungsmedium (S) detektiert, in einen Zustand wechselt, in dem keiner der ersten bis dritten Aufzeichnungsmediumdetektoren (43, 47, 49) das Aufzeichnungsmedium (S) detektiert.

13. Steuerverfahren nach Anspruch 12, wobei:
zumindest einer des ersten Aufzeichnungsmediumdetektors (43), des zweiten Aufzeichnungsmediumdetektors (47) und des dritten Aufzeichnungsmediumdetektors (49) ein Photosensor ist, der eine lichtemittierende Vorrichtung und einen Photodetektor umfasst, wobei das Verfahren ferner umfasst:
Durchführen eines Emitter-AUS-Lesebetriebs zum Detektieren von Licht, das vom Photodetektor erfasst wird, wenn die lichtemittierende Vorrichtung nicht emittiert, und eines Emitter-EIN-Lesebetriebs zum Detektieren von Licht, das vom Photodetektor erfasst wird, wenn die lichtemittierende Vorrichtung emittiert, und
Detektieren, ob das Aufzeichnungsmedium (S) vorhanden ist, auf Basis des Unterschieds zwischen den Werten, die in den Emitter-AUS- und Emitter-EIN-Lesebetrieben detektiert wurden.

14. Steuerverfahren nach Anspruch 12 oder 13, wobei:
der erste Aufzeichnungsmediumdetektor (43), der zweite Aufzeichnungsmediumdetektor (47) und der dritte Aufzeichnungsmediumdetektor (49) so konfiguriert sind, dass sie detektieren, ob das Aufzeichnungsmedium (S) vorhanden ist, in einem spezifizierten Zeitintervall, und dass sie das Aufzeichnungsmediumdetektionsergebnis bestätigen, wenn das gleiche Detektionsergebnis kontinuierlich erhalten wird.

## Revendications

1. Dispositif de traitement de supports comprenant :
des moyens d'enregistrement (46, 48) pour un enregistrement sur un support d'enregistrement (S) qui est transporté à travers un chemin de transport (5) ;
une entrée de supports d'enregistrement (3) depuis laquelle le support d'enregistrement (S) doit être inséré ;
une sortie de supports d'enregistrement (4) depuis laquelle le support d'enregistrement (S) doit être déchargé ;
une paire de premiers rouleaux de transport (34) pour transporter le support d'enregistrement (S) inséré depuis l'entrée de supports d'enregistrement (3) ;
une paire de seconds rouleaux de transport (37) pour décharger le support d'enregistrement (S) depuis la sortie de supports d'enregistrement (4) ;
un premier détecteur de support d'enregistrement (43) qui est disposé sur le chemin de transport (5) sur le côté aval des premiers rouleaux de transport (34), et est configuré pour détecter une insertion du support d'enregistrement (S) depuis l'entrée de supports d'enregistrement (3) ;
un second détecteur de support d'enregistrement (47) qui est disposé sur le chemin de transport (5) sur le côté amont des seconds rouleaux de transport (37), et est configuré pour détecter si le support d'enregistrement (S) est présent ; et
un troisième détecteur de support d'enregistrement (49) qui est disposé sur le côté aval de la sortie de supports d'enregistrement (4) adjacent à une ligne s'étendant depuis le chemin de transport (5), et est configuré pour détecter un déchargement du support d'enregistrement (S) depuis la sortie de supports d'enregistrement (4) ;
**caractérisé par le fait qu'**il comprend en outre des moyens de décision (101) pour déterminer que le support d'enregistrement (S) a été retiré du chemin de transport (5) lorsqu'un état dans lequel au moins l'un du premier détecteur de support d'enregistrement (43), du second détecteur de support d'enregistrement (47) et du troisième détecteur de support d'enregistrement (49) détecte le support d'enregistrement (S) change en un état dans lequel la totalité des premier au troisième détecteurs de support d'enregistrement (43, 47, 49) ne détectent pas le support d'enregistrement (S).

2. Dispositif de traitement de supports décrit à la revendication 1, dans lequel :
le chemin de transport (5) comprend une première partie de chemin de transport (5a) depuis l'entrée de supports d'enregistrement (3) vers les premiers rouleaux de transport (34), une seconde partie de chemin de transport (5b) depuis les premiers rouleaux de transport (34) vers les seconds rouleaux de transport (37), et une troisième partie de chemin de transport (5c) depuis les seconds rouleaux de transport (37) vers la sortie de supports d'enregistrement (4).

3. Dispositif de traitement de supports décrit à la revendication 2, dans lequel :
le premier détecteur de support d'enregistrement (43) est disposé sur la seconde partie de chemin de transport (5b) en amont du second détecteur de support d'enregistrement (47).

4. Dispositif de traitement de supports décrit à la revendication 2 ou 3, dans lequel :
les seconds rouleaux de transport (37) sont disposés sur la troisième partie de chemin de transport (5c) en amont du troisième détecteur de support d'enregistrement (49).

5. Dispositif de traitement de supports décrit à au moins l'une des revendications 2 à 4, comprenant en outre :
un quatrième détecteur de support d'enregistrement (41) pour détecter une extrémité de fin du support d'enregistrement (S) inséré depuis l'entrée de supports d'enregistrement (3) disposée sur la première partie de chemin de transport (5a).

6. Dispositif de traitement de supports décrit à au moins l'une des revendications 2 à 5, comprenant en outre :
une tête MICR (42) disposée sur la première partie de chemin de transport (5a).

7. Dispositif de traitement de supports décrit aux revendications 5 et 6, dans lequel :
le quatrième détecteur de support d'enregistrement (41) est disposé sur la première partie de chemin de transport (5a) en amont de la tête MICR (42).

8. Dispositif de traitement de supports décrit à au moins l'une des revendications 1 à 7, dans lequel :
au moins l'un du premier détecteur de support d'enregistrement (43), du second détecteur de support d'enregistrement (47) et du troisième détecteur de support d'enregistrement (49) est un capteur optique comprenant un dispositif émetteur de lumière et un photodétecteur, et est configuré pour :
- réaliser une opération de lecture de désactivation d'émetteur pour détecter une lumière détectée par le photodétecteur lorsque le dispositif émetteur de lumière n'émet pas, et une opération de lecture d'activation d'émetteur pour détecter une lumière détectée par le photodétecteur lorsque le dispositif émetteur de lumière émet, et
- détecter si le support d'enregistrement (S) est présent sur la base de la différence entre les valeurs détectées dans les opérations de lecture de désactivation d'émetteur et d'activation d'émetteur.

9. Dispositif de traitement de supports décrit à au moins l'une des revendications 1 à 8, dans lequel :
le premier détecteur de support d'enregistrement (43), le second détecteur de support d'enregistrement (47) et le troisième détecteur de support d'enregistrement (49) sont configurés pour détecter si le support d'enregistrement (S) est présent à un intervalle de temps spécifié, et pour confirmer le résultat de détection de support d'enregistrement lorsque le même résultat de détection est reçu consécutivement.

10. Dispositif de traitement de supports décrit à au moins l'une des revendications 1 à 9, dans lequel
le second détecteur de support d'enregistrement (47) est disposé plus proche du troisième détecteur de support d'enregistrement (49) qu'une longueur prédéterminée du support d'enregistrement (S) dans la direction de transport.

11. Dispositif de traitement de supports décrit à au moins l'une des revendications 1 à 10, dans lequel
les moyens d'enregistrement (46, 48) comprennent :
des premiers moyens d'enregistrement (46) pour un enregistrement sur l'arrière du support d'enregistrement (S), et
des seconds moyens d'enregistrement (48) pour un enregistrement sur l'avant du support d'enregistrement (S),
les premiers et seconds moyens d'enregistrement (46, 48) étant disposés entre le premier détecteur de support d'enregistrement (43) et le troisième détecteur de support d'enregistrement (49) avec le second détecteur de support d'enregistrement (47) qui est disposé entre les premiers moyens d'enregistrement (46) et les seconds moyens d'enregistrement (48).

12. Procédé de commande pour commander un dispositif de traitement de supports (1) comprenant
des moyens d'enregistrement (46, 48) pour un enregistrement sur un support d'enregistrement (S) qui est transporté à travers un chemin de transport (5),
une entrée de supports d'enregistrement (3) depuis laquelle le support d'enregistrement (S) doit être inséré,
une sortie de supports d'enregistrement (4) depuis laquelle le support d'enregistrement (S) doit être déchargé,
une paire de premiers rouleaux de transport (34) pour transporter le support d'enregistrement (S) inséré depuis l'entrée de supports d'enregistrement (3),
une paire de seconds rouleaux de transport (37) pour décharger le support d'enregistrement (S) depuis la sortie de supports d'enregistrement (4),
un premier détecteur de support d'enregistrement (43) qui est disposé sur le chemin de transport (5) sur le côté aval des premiers rouleaux de transport (34), et est configuré pour détecter une insertion du support d'enregistrement (S) depuis l'entrée de supports d'enregistrement (3),
un second détecteur de support d'enregistrement (47) qui est disposé sur le chemin de transport (5) sur le côté amont des seconds rouleaux de transport (37), et est configuré pour détecter si le support d'enregistrement (S) est présent, et
un troisième détecteur de support d'enregistrement (49) qui est disposé sur le côté aval de la sortie de supports d'enregistrement (4) adjacent à une ligne s'étendant depuis le chemin de transport (5), et est configuré pour détecter un déchargement du support d'enregistrement (S) depuis la sortie de supports d'enregistrement (4),
le procédé étant **caractérisé par le fait qu'**il comprend une étape consistant à déterminer que le support d'enregistrement (S) a été retiré du chemin de transport (5) lorsqu'un état dans lequel au moins l'un du premier détecteur de support d'enregistrement (43), du second détecteur de support d'enregistrement (47) et du troisième détecteur de support d'enregistrement (49) détecte le support d'enregistrement (S) change en un état dans lequel la totalité des premier au troisième détecteurs de support d'enregistrement (43, 47, 49) ne détectent pas le support d'enregistrement (S).

13. Procédé de commande décrit à la revendication 12, dans lequel
au moins l'un du premier détecteur de support d'enregistrement (43), du second détecteur de support d'enregistrement (47) et du troisième détecteur de support d'enregistrement (49) est un capteur optique comprenant un dispositif émetteur de lumière et un photodétecteur, le procédé consistant en outre à :
- réaliser une opération de lecture de désactivation d'émetteur pour détecter une lumière détectée par le photodétecteur lorsque le dispositif émetteur de lumière n'émet pas, et une opération de lecture d'activation d'émetteur pour détecter une lumière détectée par le photodétecteur lorsque le dispositif émetteur de lumière émet, et
- détecter si le support d'enregistrement (S) est présent sur la base de la différence entre les valeurs détectées dans les opérations de lecture de désactivation d'émetteur et d'activation d'émetteur.

14. Procédé de commande décrit à la revendication 12 ou 13, dans lequel :
le premier détecteur de support d'enregistrement (43), le second détecteur de support d'enregistrement (47) et le troisième détecteur de support d'enregistrement (49) sont configurés pour détecter si le support d'enregistrement (S) est présent à un intervalle de temps spécifié, et pour confirmer le résultat de détection de support d'enregistrement lorsque le même résultat de détection est reçu continument.
